Europäisches Patentamt

(19) European Patent Office

Office européen des brevets

(11) Numéro de publication : **0 188 167**
**B1**

(12) **FASCICULE DE BREVET EUROPÉEN**

(45) Date de publication du fascicule du brevet :
**13.12.89**

(21) Numéro de dépôt : **85440073.6**

(22) Date de dépôt : **06.12.85**

(51) Int. Cl.⁴ : **F 03 D 3/02**

(54) Turbine de captation de l'énergie de fluides en mouvement, en particulier de l'énergie éolienne.

(30) Priorité : **07.12.84 FR 8418860**
**20.06.85 FR 8509531**

(43) Date de publication de la demande :
**23.07.86 Bulletin 86/30**

(45) Mention de la délivrance du brevet :
**13.12.89 Bulletin 89/50**

(84) Etats contractants désignés :
**AT BE CH DE GB IT LI NL SE**

(56) Documents cités :
**DE--A-- 2 829 717**
**DE--A-- 3 137 966**
**FR--A-- 430 879**
**FR--A-- 2 266 006**
**FR--A-- 2 285 527**
**FR--A-- 2 355 178**
**FR--A-- 2 535 406**
**US--A-- 4 464 579**
**PATENTS ABSTRACTS OF JAPAN, vol. 7, no. 63 (M-200) [1208], 16 mars 1983, page 83 M 200; & JP - A - 57 206 782 (KOBAYASHI GIJUTSU KENKYUSHO K.K.) 18-12-1982**
**PATENTS ABSTRACTS OF JAPAN, vol. 8, no. 64 (M-285) [1501], 27 mars 1984, page 121 M 285; & JP - A - 58 214 680 (KOBAYASHI GIJUTSU KENKYUSHO K.K.) 13-12-1983**

(73) Titulaire : **Lepoix, Louis L.**
**51 bis, avenue de Ceinture**
**F-95880 Enghien les Bains (FR)**

(72) Inventeur : **Lepoix, Louis L.**
**51 bis, avenue de Ceinture**
**F-95880 Enghien les Bains (FR)**

(74) Mandataire : **Nuss, Pierre**
**10, rue Jacques Kabié**
**F-67000 Strasbourg (FR)**

## Description

La présente invention concerne le domaine des dispositifs capteurs d'énergie, en particulier des turbines éoliennes, et a pour objet une turbine de captation de l'énergie de fluides en mouvement, en particulier de l'énergie éolienne.

Il existe actuellement divers types de capteurs pour l'énergie éolienne, qui se présentent sous forme de turbines munies d'aubes montées sur un axe et reliées ou non entre elles par un canal de passage de l'air.

Ces turbines connues permettent l'obtention de résultats acceptables mais présentent, cependant, un faible rendement dû à leur forme. En effet, les aubes de ces turbines sont généralement constituées par des surfaces semi-cylindriques assemblées entre elles sur l'axe de rotation, avec un décalage correspondant à la section d'entrée du fluide dans lesdites aubes, de sorte que leur volume utile est relativement important pour une section d'aube donnée, et que leur coefficient de traînée est élevé.

Par ailleurs, il est connu par FR-A-2 535 406 une turbine de captation de .l'énergie de fluides en mouvement, en particulier de l'énergie éolienne, qui est essentiellement constituée par deux aubes en volume solidaires d'un axe de rotation symétriques par rapport audit axe de rotation, présentant chacune une section plane hyperboloïdale, qui s'étend avantageusement sur un angle au centre légèrement inférieur à 180°, et une section droite sensiblement elliptique en projection plane, ces aubes étant assemblées entre elles avec décalage au niveau de leur plan de jonction, de manière à réaliser deux ouvertures en forme de croissant dont les extrémités se rétrécissent pour former un canal de section semi-circulaire à chaque point de jonction entre les sections.

La turbine selon FR-A-2 535 406 est constituée par un ensemble de courbes mathématiques partant, soit d'un cercle, soit d'une ellipse, permettant la réalisation d'aubes de forme très aérodynamique et donc un rendement élevé.

On connaît également des turbines de type Darrieus constituées sous forme d'une lame de section plate qui est montée sur un axe de rotation de manière à former un élément de section ovale ou ellipsoïdale. Ces turbines de type Darrieus connues, qui sont généralement des turbines de grande puissance et de rendement élevé, présentent, cependant, l'inconvénient de nécessiter pour leur démarrage un vent de force relativement importante.

Par ailleurs, FR-A-2 285 527 décrit le montage d'une turbine de type Darrieus qui nécessite pour son démarrage un vent de force importante, avec deux turbines SAVONIUS qui sont solidaires de manière définitive de l'axe commun à la turbine Darrieus.

En outre, JP-A-58 214 680 et JP-A-57 206 782 décrivent un montage débrayable entre une turbine de Darrieus et une autre turbine de type anémomètre à géométrie variable, c'est-à-dire comportant de petites demi-sphères d'un certain poids qui ont tendance à s'écarter de l'axe central sous l'effet de la force centrifuge due à l'augmentation de la vitesse de rotation de l'ensemble. Le changement de géométrie de l'anémomètre a pour effet de réaliser un débrayage de la liaison entre ledit anémomètre et la turbine de Darrieus. Ces documents décrivent un système d'embrayage centrifuge.

Il convient cependant de noter qu'un anémomètre, qui réagit à des vitesses de vent infimes, est difficilement utilisable comme turbine de démarrage, en particulier d'une turbine de Darrieus.

La présente invention a pour but de pallier les inconvénients des turbines existantes.

Elle a, en effet, pour objet une turbine de captation de l'énergie de fluides en mouvement, en particulier de l'énergie éolienne, essentiellement constituée par la combinaison d'une turbine de type Darrieus avec une turbine essentiellement constituée par deux aubes en volume solidaires d'un axe de rotation, symétriques par rapport audit axe de rotation, présentant chacune une section hyperboloïdale, qui s'étend avantageusement sur un angle au centre légèrement inférieur à 180°, et une section droite sensiblement elliptique en projection plane, ces aubes étant assemblées entre elles avec décalage au niveau de leur plan de jonction, de manière à réaliser deux ouvertures en forme de croissant dont les extrémités se rétrécissent pour former un canal de section semi-circulaire à chaque point de jonction entre les sections, la turbine formant une turbine de démarrage de la turbine de type Darrieus par montage sur un axe de rotation commun, dont la turbine de type Darrieus est solidaire de manière définitive, caractérisée en ce que la turbine de démarrage est solidarisée avec l'axe de manière intermittente par un dispositif de liaison commandé ou à actionnement automatique, et en ce que la turbine de démarrage est montée intérieurement ou extérieurement à la turbine de Darrieus.

Le montage conforme à l'invention est différent de celui selon FR-A-2 285 527 du fait qu'est utilisée une seule turbine de démarrage montée, de préférence, au centre du dispositif (à l'intérieur de la turbine Darrieus), sans perturbation de la turbine Darrieus et non à chaque extrémité de l'axe de cette dernière comme prévu dans FR-A-2 285 527.

Par rapport à la turbine SAVONIUS, qui est constituée essentiellement de deux demi-cylindres à révolution bi-dimensionnelle qui sont calés à 180°, la turbine de démarrage conforme à l'invention présente des surfaces courbes mathématiques tridimensionnelles : ellipsoïdes, hyper-paraboloïdes paraboloïdes à ouverture décalée de 15° de chaque côté, ce qui donne à cette turbine des qualités particulières.

Enfin, la combinaison de la turbine de démarrage avec une turbine Darrieus et avec liaison intermittente au moyen d'une roue libre permet l'obtention des courbes très pentues supérieures, la turbine de démarrage réalisant, dans ce cas, uniquement le démarrage et permettant ensuite à la turbine de Darrieus d'acquérir une grande vitesse, par vent fort. La courbe en trait plein concerne un montage sur palier lisse des turbines et la courbe en trait mixte, un montage sur palier à bille, la liaison entre turbine de démarrage et turbine Darrieus étant réalisée dans les deux cas par un montage du type roue libre.

Ainsi la combinaison conforme à l'invention permet, d'une part, un démarrage par vent très faible, à savoir à une vitesse de vent plus faible que pour toutes les autres turbines, même sous un angle défavorable, par exemple avec attaque du vent sur le travers de la turbine, d'autre part, la création d'un effet MAGNUS favorable à la turbine Darrieus et la suppression des tôles de guidage de la turbine SAVONIUS, et enfin, n'induit pas d'effets de battements sonores à l'instar d'une turbine SAVONIUS à 180°. La turbine de démarrage reste silencieuse, même à vitesse élevée.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :

les figures 1 à 3 sont des vues en élévation de différents modes de réalisation possibles de la turbine conforme à l'invention ;

les figures 4 à 11 sont des vues analogues aux figures 1 à 3 de différents modes de réalisation possibles de la liaison entre les turbines de Darrieus et de démarrage ;

les figures 12 à 14 sont des vues en élévation de différentes variantes de réalisation de l'invention, et

les figures 15 à 17 sont des vues analogues aux figures 12 à 14 d'une autre variante de réalisation de l'invention, respectivement en position de repos et de faible vitesse, en position de grande vitesse, et en position de freinage en cas de tempête.

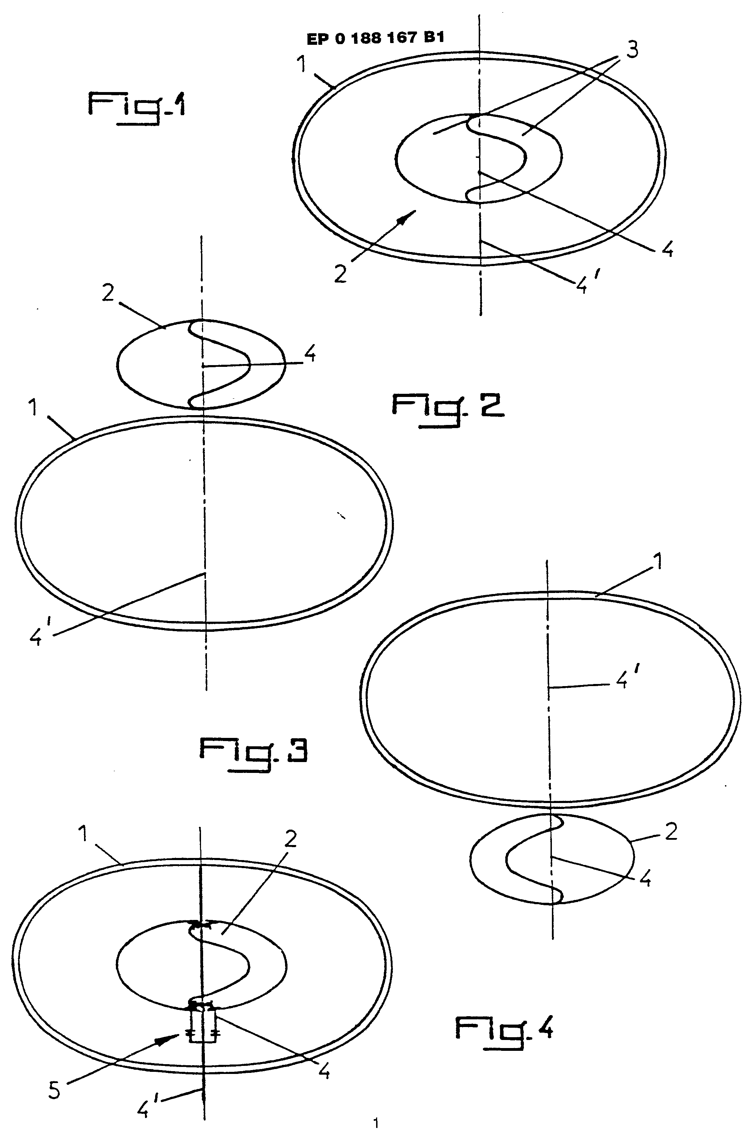

Les figures 1 à 10 des dessins annexés, représentent une turbine de captation de l'énergie de fluides en mouvement en particulier de l'énergie éolienne, essentiellement constituée par la combinaison d'une turbine (1) de type Darrieus avec une turbine (2) essentiellement constituée par deux aubes en volume (3) solidaires d'un axe de rotation (4), symétriques par rapport audit axe de rotation, présentant chacune une section hyperboloïdale, qui s'étend avantageusement sur un angle au centre légèrement inférieur à 180°, et une section droite sensiblement elliptique en projection plane, ces aubes (3) étant assemblées entre elles avec décalage au niveau de leur plan de jonction, de manière à réaliser deux ouvertures en forme de croissant dont les extrémités se rétrécissent pour former un canal de section semi-circulaire à chaque point de jonction entre les sections, la turbine (2) formant une turbine de démarrage de la turbine (1) de type Darrieus par montage sur un axe de rotation commun (4'), dont la turbine (1) de type Darrieus est solidaire de manière définitive, caractérisée en ce que la turbine (2) de démarrage est solidarisée avec l'axe (4') de manière intermittente par un dispositif de liaison commandé ou à actionnement automatique, et en ce que la turbine de démarrage (2) est montée intérieurement ou extérieurement à la turbine de Darrieus (1).

La turbine 2 peut être montée à l'intérieur de la turbine 1 (figure 1) ou à l'extérieur de cette dernière, à savoir au-dessus (figure 2) ou en dessous (figure 3). Dans ces cas de figure la liaison entre la turbine 2 et l'axe 4' est une liaison fixe. Un tel mode de réalisation permet d'abaisser considérablement la vitesse de vent nécessaire pour entraîner une turbine de Darrieus et d'augmenter simultanément le rendement énergétique de la turbine 2, qui joue, en outre le rôle de frein pour la turbine 1 en cas de très grandes vitesses de vent, de sorte que la turbine 1 ne peut pas atteindre sa vitesse critique.

La figure 4 représente une variante de réalisation de l'invention, dans laquelle la liaison entre la turbine 2 et l'axe 4' de la turbine 1 est une liaison intermittente à actionnement automatique formée par un dispositif à roue libre 5, dont la roue d'entraînement est solidaire de l'axe 4 de la turbine 2 et dont le cliquet est solidaire de l'axe 4'.

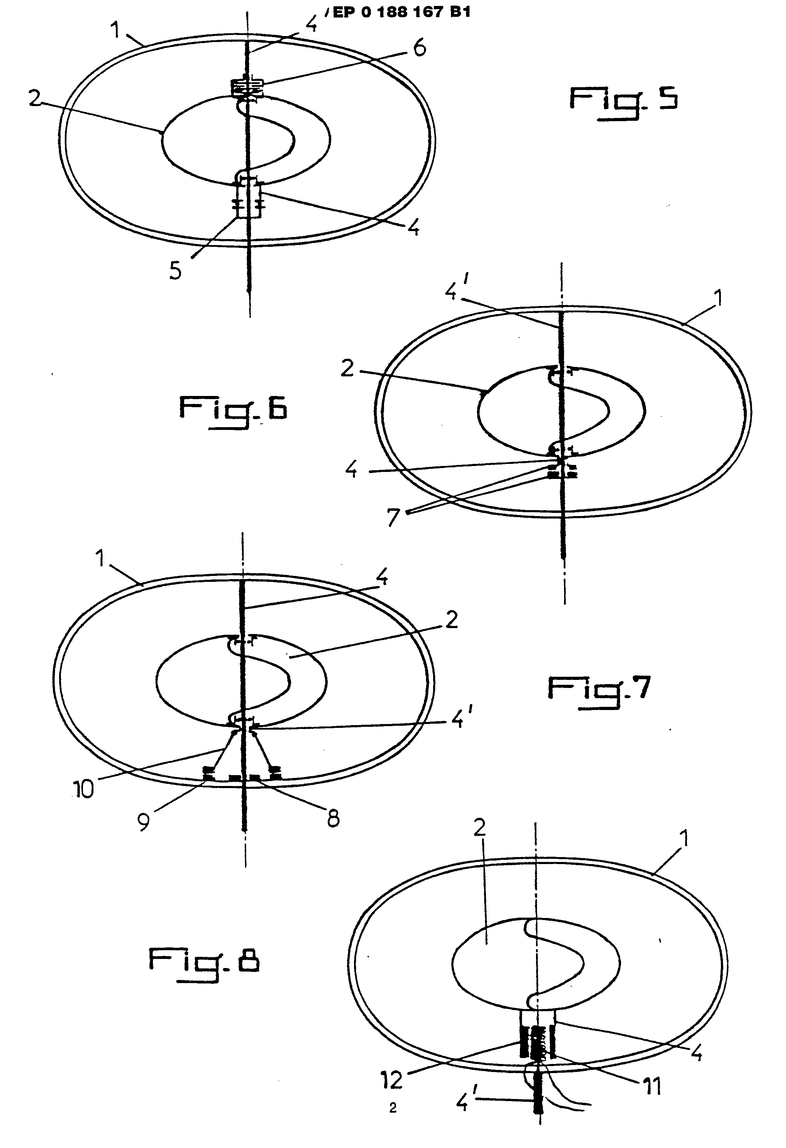

La figure 5 représente une variante de réalisation, dans laquelle la liaison intermittente à actionnement automatique est constituée, d'une part par un dispositif à roue libre 5 servant au démarrage et d'autre part, par un embrayage centrifuge 6 rétablissant une liaison entre les turbines 2 et 1 dès atteinte d'une vitesse de fonctionnement critique de la turbine 1 en vue de son freinage. Ainsi, la turbine 2 permet le démarrage de la turbine 1 au moyen du dispositif 5, puis son fonctionnement indépendant, et l'embrayage centrifuge 6 est enclenché lors d'un dépassement de la vitesse de rotation maximale prédéterminée, de sorte que la turbine 2 freine la turbine 1.

Selon une autre caractéristique de l'invention, la liaison de freinage entre la turbine 1 et la turbine 2 peut également être commandée et s'effectuer au moyen d'un embrayage électromagnétique actionné par le courant d'un générateur ou un courant d'une batterie auxiliaire, la mise en action étant commandée par un anémomètre, par un tachymètre, ou par un autre dispositif de commande à une vitesse de vent ou de rotation prédéterminée.

La liaison intermittente entre les deux turbines 2 et 1 peut également être réalisée au moyen d'aimants permanents 7 montés sur les axes 4 et 4', sans contact entre eux, et solidaires de ces derniers (figure 6). Par ce mode de réalisation, l'entraînement de la turbine 1 par la turbine 2 est assuré au démarrage, et dès atteinte de la vitesse de rotation maximale de la turbine 2 la turbine 1 peut continuer à vitesse accélérée, aucune pièce de liaison physique ne la reliant à ladite turbine 2.

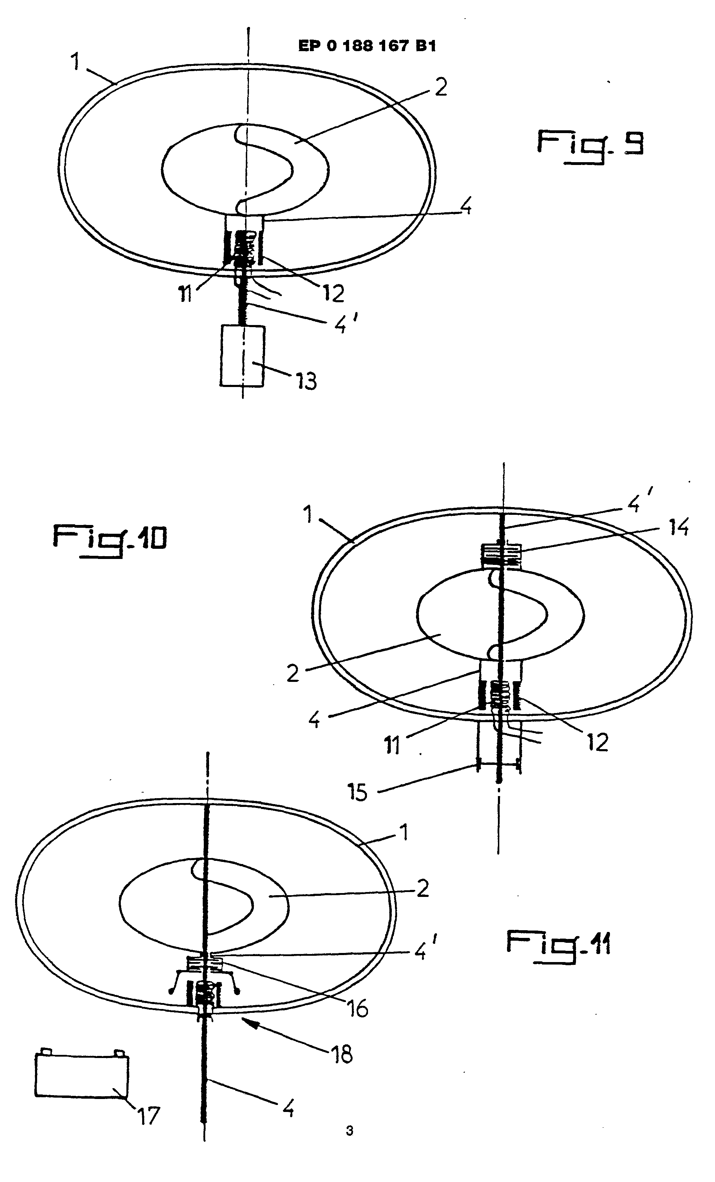

La figure 7 représente une variante de réalisation de l'invention, dans laquelle la liaison intermittente entre les turbines 2 et 1 est réalisée au moyen de deux groupes d'aimants 8 et 9 coopérant avec un dispositif de raccordement centrifuge 10, le groupe d'aimants 8 étant avantageusement des aimants permanents et servant au démarrage, alors que le groupe d'aimants 9 est, de préférence, un groupe d'aimants excités coopérant avec le dispositif de raccordement 10 pour le freinage et actionnés par un anémomètre, par un tachymètre ou par un autre dispositif de commande à une vitesse de vent ou de rotation prédéterminée.

Selon une variante de réalisation de la figure 7, non représentée, la liaison intermittente entre les turbines 2 et 1 peut être réalisée au moyen de deux groupes d'aimants 8 et 9 coopérant ou non avec un dispositif de raccordement centrifuge 10 pour le freinage, ces aimants étant actionnés par un courant d'une batterie annexe qui est commandé par un anémomètre, par un tachymètre, ou par un autre dispositif de commande à une vitesse de vent ou de rotation prédéterminée. Dans un tel mode de réalisation, le raccordement entre les turbines 2 et 1 et leur désaccouplement peuvent être effectués par simple excitation des aimants ou en coupant cette excitation.

Selon une autre variante de réalisation de l'invention, et comme le montre la figure 8, l'axe 4' solidaire de la turbine de Darrieus 1 est avantageusement muni d'un stator 11 d'un générateur électrique et l'axe 4 de la turbine 2 montée à rotation libre sur l'axe 4' est muni du rotor 12 dudit générateur, un dispositif à roue libre (non représenté) pouvant assurer la liaison des deux turbines au démarrage, la vitesse différentielle des turbines produisant en régime de fonctionnement normal de l'énergie électrique directement utilisable.

Il est également possible de prévoir que l'axe 4', qui est solidaire de la turbine de Darrieus 1, est avantageusement muni d'un stator 11 d'un générateur électrique et l'axe 4 de la turbine 2, qui est montée à rotation libre sur l'axe 4', est muni du rotor 12 dudit générateur, la liaison des deux turbines 2 et 1 étant assurée grâce à un courant d'excitation provenant d'une batterie (non représentée) et commandée par un anémomètre, par un tachymètre, ou par un autre dispositif de commande à une vitesse de vent ou de rotation prédéterminée. En régime de fonctionnement normal, la vitesse différentielle des turbines 2 et 1 produit alors une énergie électrique directement utilisable.

La figure 9 représente une autre variante de réalisation de la combinaison de turbines suivant la figure 8, dans laquelle le courant produit par le générateur formé par l'ensemble stator 11 et rotor 12 excite un générateur 13 à excitation variable, intégré ou non à l'ensemble de turbines.

Enfin, la figure 10 représente une autre variante de réalisation de l'invention, dans laquelle le courant électrique produit par l'ensemble stator 11 et rotor 12 est destiné à actionner un embrayage électrique 14 de liaison de la turbine 2 avec l'axe 4' de la turbine 1 et/ou un frein électrique 15 monté sur l'axe 4' pour le freinage de la turbine 1, l'embrayage 14 étant actionné par l'intermédiaire d'un déclencheur réagissant à un seuil de courant ou de puissance fournie donné, à savoir un seuil inférieur, et le frein étant actionné par ce même déclencheur ou par un deuxième déclencheur dès atteinte d'un seuil de courant ou de puissance supérieur prédéterminé.

Il est également possible, comme le montre la figure 11, de réaliser la liaison intermittente entre les turbines 2 et 1 au moyen d'un dispositif centrifuge à contacts 16 solidaire de l'axe 4 de la turbine de démarrage 2 et combiné avec un embrayage. Ce dispositif 16 débraye la liaison entre les turbines 2 et 1 à une vitesse de rotation prédéterminée et ses contacts mettent alors en circuit une batterie annexe 17, dont le courant sert à l'excitation d'un générateur 18, dont le stator est solidaire de l'axe 4' de la turbine 1 et dont le rotor est solidaire de ladite turbine 1. En service, le générateur 18 recharge la batterie annexe 17.

Conformément à une autre caractéristique de l'invention, les turbines 2 et 1 peuvent être munies d'éléments lumineux sous forme de lampes ou de signaux, intégrés à l'ensemble de la turbine ou à un de ses éléments, et dont l'alimentation en courant électrique est assurée par un générateur intégré à la turbine ou entraîné par celle-ci. Un tel mode de réalisation s'avère particulièrement intéressant dans le domaine de la signalisation ou de la décoration, aucune source annexe de courant n'étant nécessaire.

Grâce à l'invention, il est possible de réaliser une combinaison de turbines permettant l'obtention de puissances considérables, tout en limitant les vitesses de rotation extrêmes supérieures. Les modes de réalisation selon l'invention permettent notamment de réaliser des dispositifs de signalisation ou de décoration intégrant des luminaires, ou des lampes à éclairs.

Conformément à une autre variante de réalisation de l'invention, et comme le montre plus particulièrement, à titre d'exemple, la figure 12 des dessins annexés, la turbine 1 de type Darrieus est déformable élastiquement et présente à sa partie inférieure deux branches 1' qui sont reliées à l'axe de rotation commun 4' et qui agissent sur la turbine de démarrage 2 au moyen d'un dispositif d'embrayage centrifuge 19.

La turbine 1 de type Darrieus est avantageusement constituée par des lames montées symétriquement chacune par une extrémité sur la partie supérieure de l'axe de rotation commun 4', et par son autre extrémité 1' sur des leviers 20 agissant sur la turbine de démarrage 2 (figures 12 à 17). Un tel mode de réalisation de la turbine 1 permet son rangement sous un encombrement réduit particulièrement intéressant pour le colisage ou le stockage.

Les leviers 20 agissant sur la turbine de démarrage 2 sont montés avec possibilité de basculement sur des supports 21 de l'axe 4' et forment les éléments mobiles du dispositif d'embrayage centrifuge 19 et/ou de freinage.

Le dispositif d'embrayage centrifuge 19 est constitué (figure 12) par deux couronnes d'embrayage concentriques 22, 23, solidaires de l'axe de rotation 4 de la turbine 2, dont la couronne extérieure 22 coopère avec des patins d'embrayage 24 solidaires des extrémités des leviers 20, en position de démarrage de la turbine, et dont la couronne intérieure 23 coopère avec lesdits leviers 20 en position de très grande vitesse de rotation en vue d'un réembrayage de la turbine 2, un ressort de compression 25 chargeant les leviers 20 sous une tension prédéterminée. Ce ressort 25 permet de compenser partiellement la force exercée par les branches 1' de la turbine 1 sur l'extrémité des leviers 20 pour réaliser l'embrayage des patins 24 avec la couronne extérieure 22 et ainsi le démarrage de la turbine 1, une augmentation de la vitesse de rotation de ladite turbine 1 provoquant, sous l'effet de la force centrifuge, un basculement des leviers 20 autour des supports 21 dans le sens d'une compression du ressort 25 jusqu'à débrayage des patins 24 et donc de la turbine de démarrage 2. En cas de tempête, l'augmentation de la force centrifuge provoque un basculement supplémentaire des leviers 20 et une compression supplémentaire du ressort 25 entraînant l'embrayage des patins 24 avec la couronne intérieure 23, et donc un réembrayage de la turbine de démarrage 2 qui a pour effet de freiner l'ensemble de turbine, la turbine 2 formant alors frein aérodynamique.

La figure 13 représente une variante de réalisation de l'invention, dans laquelle les patins d'embrayage 24 des leviers 20 coopèrent, en position de repos ou de faible vitesse de rotation, avec une couronne d'embrayage 26 solidaire de la turbine de démarrage 2, les leviers étant maintenus dans ladite position de repos par un ressort de rappel 27 à tension prédéterminée, et l'extrémité opposée 28 des leviers 20 coopère, en position de très grande vitesse de la turbine 1, avec un frein 29, solidaire du mât 30 de support, à friction, hydraulique, ou électrique. Le frein électrique peut, par exemple, être sous forme d'un générateur secondaire.

Conformément à une autre variante de réalisation de l'invention, et comme le montre la figure 14, les leviers 20 solidaires de l'axe 4' coopèrent, en position de grande vitesse de rotation de la turbine 1 avec une couronne 31 solidaire d'un axe 32 d'entraînement d'un dispositif 33 de transformation d'énergie. Ainsi, en position de repos ou de faible vitesse de rotation les deux turbines 2 et 1 sont en interaction, tandis qu'à grande vitesse, la turbine 1 entraîne le dispositif 33 qui réalise simultanément la régulation de la vitesse de rotation de la turbine 1.

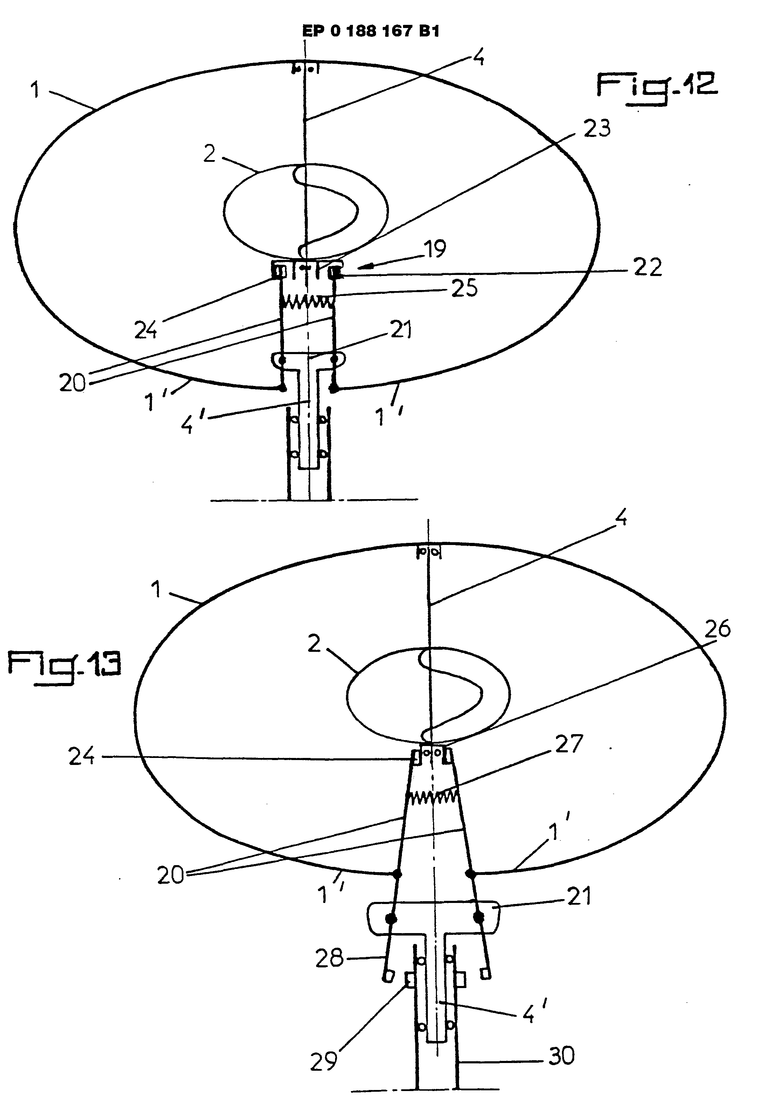

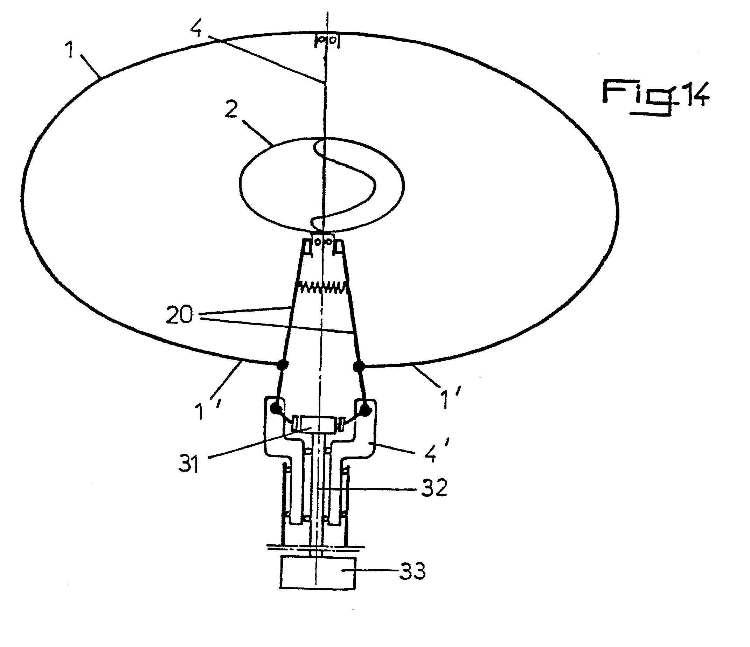

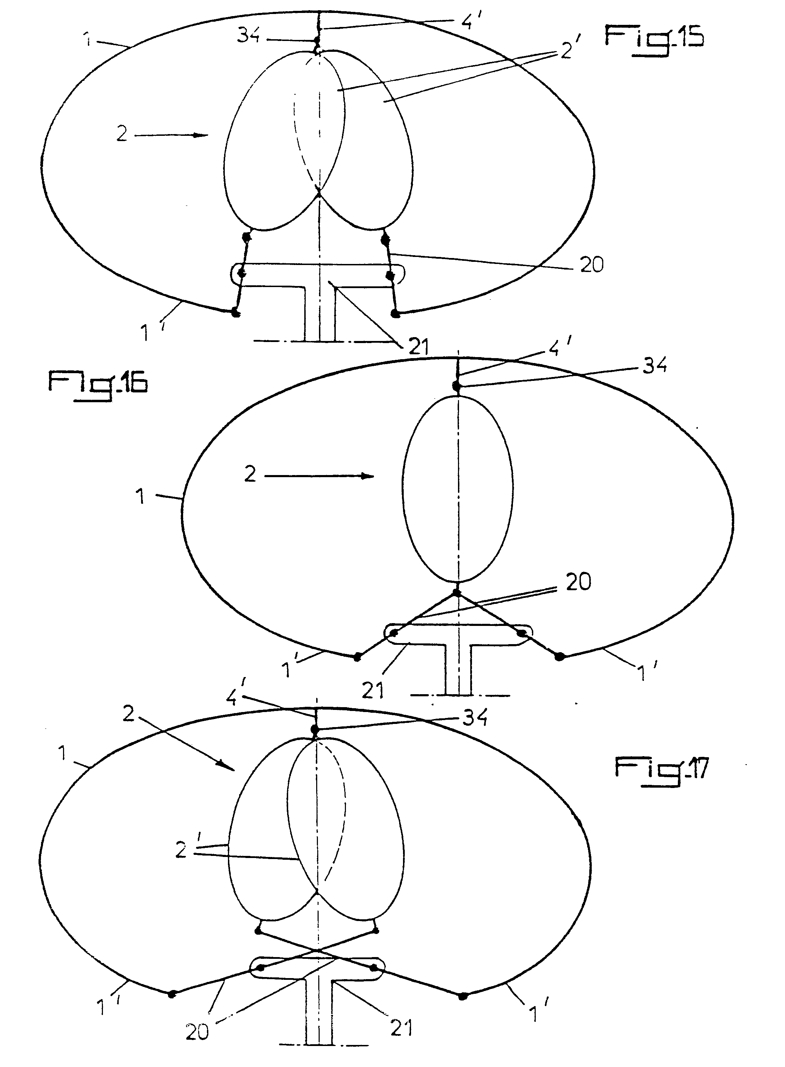

Les figures 15 à 17 représentent une autre variante de réalisation de l'invention, dans laquelle la turbine de démarrage 2 est constituée par deux aubes en volume 2' solidaires à leur partie supérieure d'une articulation commune 34 prévue sur l'axe commun de rotation 4', et montées à articulation, à leur partie inférieure, sur une extrémité des leviers 20 montés sur les supports 21, et dont l'autre extrémité est reliée aux branches 1' de la turbine 1. Dans ce mode de réalisation, la turbine de démarrage 2 se trouve, au repos et à faible vitesse (figure 15), dans une configuration de résistance à l'air dans un sens d'entraînement de la turbine 1 de type Darrieus. A vitesse de fonctionnement normale de la turbine 1, la force centrifuge s'exerçant sur cette dernière déplace, par l'intermédiaire des leviers 20, la partie inférieure des aubes 2' en direction de l'axe de la turbine jusqu'à formation d'un volume complètement fermé de moindre résistance à l'air (figure 16). En cas d'augmentation exagérée de la vitesse de rotation de la turbine 1, la force centrifuge tendra à écarter davantage les branches 1' en tirant sur l'extrémité correspondante des leviers 20, de sorte que les aubes en volume 2' seront pivotées dans la position représentée à la figure 17 et donc ouvertes à contre-courant, formant ainsi un frein aérodynamique.

Grâce aux modes de réalisation selon les figures 12 à 17, il est possible de réaliser des turbines de forte puissance à autorégulation de vitesse par la force centrifuge.

**Revendications**

1. Turbine de captation de l'énergie de fluides en mouvement, en particulier de l'énergie éolienne, essentiellement constituée par la combinaison d'une turbine (1) de type Darrieus avec une turbine (2) essentiellement constituée par deux aubes en volume (3) solidaires d'un axe de rotation (4), symétriques par rapport audit axe de rotation, la turbine (2) formant une turbine de démarrage de la turbine (1) de type Darrieus par montage sur un axe de rotation commun (4'), dont la turbine (1) de type Darrieus est solidaire de manière définitive, caractérisée en ce que les aubes de la turbine de démarrage présentent chacune une section hyperboloïdale, qui s'étend avantageusement sur un angle au centre légèrement inférieur à 180°, et une section droite sensiblement elliptique en projection plane, ces aubes (3) étant assemblées entre elles avec décalage au niveau de leur plan de jonction, de manière à réaliser deux ouvertures en forme de croissant dont les extrémités se rétrécissent pour former un canal de section semi-circulaire à chaque point de jonction entre les sections, et que la turbine (2) de démarrage est solidarisée avec l'axe (4') de manière intermittente par un dispositif de liaison commandé ou à actionnement automatique, et en ce que la turbine de démarrage (2) est montée intérieurement ou extérieurement à la turbine de Darrieus (1).

2. Turbine, suivant la revendication 1, caractérisée en ce que la liaison entre la turbine (2) et l'axe (4') de la turbine (1) est une liaison intermittente à actionnement automatique formée par un dispositif à roue libre (5), dont la roue d'entraînement est solidaire de l'axe (4) de la turbine (2) et dont le cliquet est solidaire de l'axe (4').

3. Turbine, suivant la revendication 1, caractérisée en ce que la liaison intermittente à actionnement automatique est constituée, d'une part, par un dispositif à roue libre (5) servant au démarrage, et, d'autre part, par un embrayage centrifuge (6) rétablissant une liaison entre les turbines (2) et (1) dès atteinte d'une vitesse de fonctionnement critique de la turbine (1) en vue de son freinage.

4. Turbine, suivant la revendication 3, caractérisée en ce que la liaison de freinage entre la turbine (1) et la turbine (2) est commandée et s'effectue au moyen d'un embrayage électromagnétique actionné par le courant d'un générateur ou un courant d'une batterie auxiliaire, la mise en action étant commandée par un anémomètre ou par un tachymètre à une vitesse de vent ou de rotation prédéterminée.

5. Turbine, suivant la revendication 1, caractérisée en ce qui la liaison intermittente entre les turbines (2 et 1) est réalisée au moyen de deux groupes d'aimants (8 et 9) coopérant avec un dispositif de raccordement centrifuge (10), les groupes d'aimants étant, l'un (8) sous forme d'aimants permanents servant au démarrage, et l'autre (9) sous forme d'aimants excités coopérant avec le dispositif de raccordement (10) pour le freinage, soit les deux (8 et 9) sous forme d'aimants excités, les aimants excités étant actionnés par un courant d'une batterie annexe, ce courant étant commandé par un anémomètre, par un tachymètre, ou par tout autre dispositif de commande à une vitesse de vent ou de rotation prédéterminée.

6. Turbine, suivant la revendication 1, caractérisée en ce que l'axe (4') solidaire de la turbine de Darrieus (1) est avantageusement muni d'un stator (11) d'un générateur électrique et l'axe (4) de la turbine (2) montée à rotation libre sur l'axe (4') est muni du rotor (12) dudit générateur, un dispositif à roue libre pouvant assurer la liaison des deux turbines au démarrage, la vitesse différentielle des turbines produisant en régime de fonctionnement normal de l'énergie électrique directement utilisable.

7. Turbine, suivant la revendication 1, caractérisée en ce que l'axe (4') solidaire de la turbine de Darrieus (1) est avantageusement muni d'un stator (12) d'un générateur électrique et l'axe (4) de la turbine (2) montée à rotation libre sur l'axe (4') est muni du rotor (12) dudit générateur, un courant d'excitation provenant d'une batterie et commandé par un anémomètre, par un tachymètre, ou par un autre dispositif de commande à une vitesse de vent ou de rotation prédéterminée assurant la liaison des deux turbines au démarrage, la vitesse différentielle des turbines produisant en régime de fonctionnement normal de l'énergie électrique directement utilisable, le courant produit par le générateur formé par l'ensemble stator (11) et rotor (12) excitant un générateur (13) à excitation variable, intégré ou non à l'ensemble de turbines, ou actionnant un embrayage électrique (14) de liaison de la turbine (2) avec l'axe (4') de la turbine (1) et/ou un frein électrique (15) monté sur l'axe (4') pour le freinage de la turbine (1), l'embrayage (14) étant actionné par l'intermédiaire d'un déclencheur réagissant à un seuil de courant ou de puissance fournie donné, à savoir un seuil inférieur, et le frein étant actionné par ce même déclencheur ou par un deuxième déclencheur dès atteinte d'un seuil de courant ou de puissance supérieur prédéterminé.

8. Turbine, suivant la revendication 1, caractérisée en ce que la liaison intermittente entre les turbines (2 et 1) est réalisée au moyen d'un dispositif centrifuge à contacts (16) solidaire de l'axe (4) de la turbine de démarrage (2) et combiné avec un embrayage, le dispositif centrifuge (16) débrayant, à une vitesse de rotation prédéterminée, la liaison entre les turbines (2 et 1), et ses contacts mettant alors en circuit une batterie annexe (17), dont le courant sert à l'excitation d'un générateur (18), dont le stator est solidaire de l'axe (4') fixe de la turbine (1) et dont le rotor est solidaire de ladite turbine (1), ce générateur (18) rechargeant, en service, la batterie annexe (17).

9. Turbine, suivant l'une quelconque des revendications 1 à 8, caractérisée en ce que les turbines (2 et 1) sont munies d'éléments lumineux sous forme de lampes ou de signaux dont l'alimentation en courant électrique est assurée par un générateur intégré à la turbine ou entraîné par celle-ci.

10. Turbine, suivant l'une quelconque des revendications 1 à 9, caractérisée en ce que la turbine (1) de type Darrieus est déformable élastiquement et est constituée, de préférence, par des lames montées symétriquement chacune par une extrémité sur la partie supérieure de l'axe de rotation commun (4'), et par son autre extrémité en forme de branche (1'), de manière mobile à l'axe de rotation commun (4') au moyen de leviers (20) agissant sur la turbine de démarrage (2), soit au moyen d'un dispositif centrifuge d'embrayage et/ou de freinage, soit directement, les leviers (20) étant montés avec possibilité de basculement sur des supports (21) de l'axe (4') et formant les éléments mobiles d'un dispositif d'embrayage centrifuge (19) et/ou de freinage.

11. Turbine, suivant la revendication 10, caractérisée en ce que le dispositif d'embrayage centrifuge (19) est constitué par deux couronnes d'embrayage concentriques (22, 23), solidaires de l'axe de rotation de la turbine (2), dont la couronne extérieure (22) coopère avec des patins d'embrayage (24) solidaires des extrémités des leviers (20), en position de démarrage de la turbine, et dont la couronne intérieure (23) coopère avec lesdits leviers (20) en position de très grande vitesse de rotation en vue d'un réembrayage de la turbine (2), un ressort de compression (25) chargeant les leviers (20) sous une tension prédéterminée.

12. Turbine, suivant l'une quelconque des revendications 10 et 11, caractérisée en ce que les patins d'embrayage (24) des leviers (20) coopèrent, en position de repos ou de faible vitesse de rotation avec une couronne d'embrayage (26) solidaire de la turbine de démarrage (2), les leviers étant maintenus dans ladite position de repos par un ressort de rappel (27) à tension prédéterminée, et l'extrémité opposée (28) des leviers (20) coopère, en position de très grande vitesse de la turbine (1), avec un frein (29), solidaire du mât (30) de support à friction, hydraulique, ou électrique.

13. Turbine, suivant la revendication 10, caractérisée en ce que les leviers (20) solidaires de l'axe (4') coopèrent, en position de grande vitesse de rotation de la turbine (1) avec une couronne (31) solidaire d'un axe (32) d'entraînement d'un dispositif (33) de transformation d'énergie.

14. Turbine, suivant la revendication 10, caractérisée en ce que la turbine de démarrage (2) est constituée par deux aubes en volume (2') solidaires à leur partie supérieure d'une articulation commune (34) prévue sur l'axe commun de rotation (4'), et monté à articulation à leur partie inférieure, sur une extrémité des leviers (20) montés sur les supports (21), et dont l'autre extrémité est reliée aux branches (1') de la turbine (1).

## Claims

1. A turbine for harnessing the power of moving fluids, particularly wind power, consisting essentially of the combination of a Darrieus-type turbine (1) and a turbine (2) consisting of two voluminous blades (3) rigidly connected to a rotational shaft (4) and symmetrical with respect to said rotational shaft, the turbine (2) forming a starting turbine for the Darrieus-type turbine (1) by being mounted on a common rotational shaft (4') to which the Darrieus-type turbine (1) is rigidly connected in a definitive manner, characterised in that the blades of the starting turbine each have a hyperboloidal section which advantageously extends over an angle at the centre which is slightly less than 180º, and a cross section which is substantially elliptical in plane projection, these blades (3) being assembled together with offsetting at the level of their junction plane, in such a manner as to form two openings in the shape of a crescent, the ends of which narrow to form a channel of semicircular section at each junction point between the sections, and that the starting turbine (2) is rigidly connected to the shaft (4') in an intermittent manner through a connecting device which is controlled or has an automatic action, and in that the starting turbine (2) is mounted inside or outside the Darrieus-type turbine (1).

2. A turbine according to Claim 1, characterised in that the connection between the turbine (2) and the shaft (4') of the turbine (1) is an intermittent connection with automatic operation formed by a free-wheel device (5), the driving wheel of which is rigidly connected to the shaft (4) of the turbine (2) and the pawl of which is rigidly connected to the shaft (4').

3. A turbine according to Claim 1, characterised in that the intermittent connection with automatic operation consists, on the one hand of a free-wheel device (5) serving for the starting and, on the other hand, of a centrifugal clutch (6) restoring a connection between the turbines (2) and (1) as soon as a critical speed of operation of the turbine (1) is reached, with a view to its braking.

4. A turbine according to Claim 3, characterised in that the braking connection between the turbine (1) and the turbine (2) is controlled and is effected by means of an electromagnetic clutch actuated by the current of a generator or a current from an auxiliary battery, the setting in action being controlled by an anemometer or by a tachometer at a predetermined wind speed or speed of rotation.

5. A turbine according to Claim 1, characterised in that the intermittent connection between the turbines (2 and 1) is effected by means of two groups of magnets (8 and 9) cooperating with a centrifugal connecting device (10), the groups of magnets being, the one (8) in the form of permanent magnets serving for the starting and the other (9) in the form of excited magnets cooperating with the connecting device (10) for the braking, or both (8 and 9) in the form of excited magnets, the excited magnets being actuated by a current from an attached battery, this current being controlled by an anemometer, by a tachometer or by any other control device, at a predetermined wind speed or speed of rotation.

6. A turbine according to Claim 1, characterised in that the shaft (4') rigidly connected to the Darrieus-type turbine (1) is advantageously equipped with a stator (11) of an electric generator and the shaft (4) of the turbine (2) mounted for free rotation on the shaft (4') is equipped with the rotor (12) of said generator, a free-wheel device being able to ensure the connection of the two turbines on starting, the differential speed of the turbines producing, under normal operating conditions, electrical power which can be used directly.

7. A turbine according to Claim 1, characterised in that the shaft (4') rigidly connected to the Darrieus-type turbine (1) is advantageously equipped with a stator (12) of an electric generator and the shaft (4) of the turbine (2) mounted for free rotation on the shaft (4') is equipped with the rotor (12) of said generator, an exciting current originating from a battery and controlled by an anemometer, by a tachometer or by another control device, at a predetermined wind speed or speed of rotation, ensuring the connection of the two turbines on starting, the differential speed of the turbines producing, under normal operating conditions, electrical power which can be used directly, the current produced by the generator formed by the assembly of stator (11) and rotor (12) exciting a generator (13) with variable excitation, which may or may not be integrated in the turbine unit, or actuating an electric clutch (14) for connecting the turbine (2) to the shaft (4') of the turbine (1) and/or an electric brake (15) mounted on the shaft (4') for the braking of the turbine (1), the clutch (14) being actuated by means of a tripping device reacting to a given threshold of current or of power supplied, namely a lower threshold, and the brake being actuated by this same tripping device or by a second tripping device as soon as a predetermined higher threshold of current or of power is reached.

8. A turbine according to Claim 1, characterised in that the intermittent connection between the turbines (2 and 1) is effected by means of a centrifugal contact device (16) rigidly connected to the shaft (4) of the starting turbine (2) and combined with a clutch, the centrifugal device (16) disengaging, at a predetermined speed of rotation, the connection between the turbines (2 and 1), and its contacts then connecting in an attached battery (17), the current of which serves to excite a generator (18), the stator of which is rigidly connected to the fixed shaft (4') of the turbine (1) and the rotor of which is rigidly connected to said turbine (1), this generator (18) recharging the battery attached (17), in service.

9. A turbine according to any one of Claims 1 to 8, characterised in that the turbines (2 and 1) are equipped with luminous elements in the form of lamps or signals, the feeding of which with electric current is ensured by a generator integrated in the turbine or driven by the latter.

10. A turbine according to any one of Claims 1 to 9, characterised in that the Darrieus-type turbine (1) is resiliently deformable and preferably consists of blades mounted symmetrically each by one end on the upper portion of the common rotational shaft (4') and by its other end, in the form of a branch (1'), in a movable manner in relation to the common rotational shaft (4') by means of levers (20) acting on the starting turbine (2), either by means of a centrifugal clutch and/or braking device, or directly, the levers (20) being mounted with the possibility of rocking on supports (21) of the shaft (4') and forming the movable elements of a centrifugal clutch and/or brake device (19).

11. A turbine according to Claim 10, characterised in that the centrifugal clutch device (19) consists of two concentric clutch rings (22, 23) rigidly connected to the rotational shaft of the turbine (2), of which the outer ring (22) cooperates with clutch shoes (24) rigidly connected to the ends of the levers (20), in the starting position of the turbine, and of which the inner ring (23) cooperates with said levers (20) in the position of very high speed of rotation with a view to a reconnection of the turbine (2), a compression spring (25) loading the levers (20) under a predetermined stress.

12. A turbine according to any one of Claims 10 and 11, characterised in that the clutch shoes (24) of the levers (20) cooperate, in the position of rest or of low speed of rotation, with a clutch ring (26) rigidly connected to the starting turbine (2), the levers being held in said position of rest by a return spring (27) with a predetermined stress, and the opposite end (28) of the levers (20) cooperates, in the very high speed position of the turbine (1), with a brake (29) rigidly connected to the supporting mast (30), and of the friction, hydraulic or electric type.

13. A turbine according to Claim 10, characterised in that the levers (20) rigidly connected to the shaft (4') cooperate, in the position of high speed of rotation of the turbine (1), with a ring (31) rigidly connected to a driving shaft (32) of an energy transformation device (33).

14. A turbine according to Claim 10, characterised in that the starting turbine (2) consists of two voluminous blades (2') rigidly connected, at their upper portion, to a common joint (34) provided on the common rotational shaft (4') and mounted, with articulation, at their lower portion, on one end of the levers (20) mounted on the supports (21), the other end of which is connected to the branches (1') of the turbine (1).

## Patentansprüche

1. Turbine zur Aufnahme von Fludiumenergie, insbesondere Wind-Energie, hauptsächlich bestehend aus der Kombination einer Turbine (1) Typ Darrieus mit einer Turbine (2), bestehend aus zwei räumlichen Leitschaufeln die mit einer Rotationsachse (4) verbunden sind und ihr gegenüber symetrisch angeordnet sind, wobei die Turbine (2) eine Anlaufturbine der Turbine (1) vom Typ Darrieus bildet, durch die Montage auf eine gemeinsame Rotationsachse (4'), welche mit der Turbine (1) Typ Darrieus definitiv fest verbunden ist, dadurch gekennzeichnet dass jede Leitschaufel der Turbine (2) einen hyperboloïdalen Querschnitt aufweist der sich vorteilhaft nach einem zentralen Winkel leicht weniger als 180° verteilt und einen orthogonalen Querschnitt aufweist der annähernd elliptisch in seiner Projektion ist, wobei diese Leitschaufeln (3) versetzt auf der Ebene ihres Verhindungsanschlusses miteinander verbunden sind, so dass zwei Öffnungen in Form von Halbmonden entstehen bei denen sich die Enden verkleinern um einen halbrunden Kanal an jedem Verbindungspunkt der Querschnitte zu bilden, dass die Anlaufturbine (2) durch eine gesteuerte oder automatische Verbindungsvorrichtung diskontinuierlich mit der Achse (4') verbunden ist und dass die Anlaufturbine (2) ausserhalb oder innerhalb der Turbine (1) Typ Darrieus montiert ist.

2. Turbine nach Anspruch 1, dadurch gekennzeichnet dass die Verbindung zwischen der Turbine (2) und der Achse (4') der Turbine (1) eine diskontinuierliche Verbindung ist mit automatischer Wirkung bestehend aus einer Freilaufvorrichtung (5) in welcher das Antriebsrad solidarisch der Achse (4) der Turbine (2) verbunden ist und in welcher der Ritzel mit der Achse (4') verbunden ist.

3. Turbine nach Anspruch 1, dadurch gekennzeichnet dass die diskontinuierliche Verbindung mit automatischer Wirkung, einerseits, aus einer Freilaufvorrichtung (5), die für den Anlauf benutzt ist, und andererseits aus einer zentrifugalen Kupplung (6), die eine Verbindung zwischen den Turbinen (2) und (1) herstellt sobald eine kritische Umdrehung der Turbine (1) erreicht ist, um diese zu bremsen, besteht.

4. Turbine nach Anspruch 3, dadurch gekennzeichnet dass die Bremsverbindung zwischen den Turbinen (1) und (2) durch eine elektromagnetische durch den Strom eines Generators oder einer Zusatzbatterie gesteuerte Kupplung, gesteuert ist und betätigt wird, wobei der Anlauf der Steuerung durch einen Anemometer oder einen Tachymeter bei einer vorbestimmten Windgeschwindigkeit oder Umdrehungszahl bewirkt wird.

5. Turbine nach Anspruch 1, dadurch gekennzeichnet dass die diskontinuierliche Verbindung zwischen den Turbinen (2 und 1) aus zwei Magnetgruppen (8) und (9) besteht, die mit einer zentrifugalen Verbindungsvorrichtung (10) mitwirkt, wobei eine Magnetgruppe (8) in Form von permanenten Magneten besteht, die für den Anlauf dienen und die andere (9) in Form von erregten Magneten die mit der Verbindungsvorrichtung (10) für die Bremswirkung mitwirken, sei es die zwei Magnetgruppen (8) und (9) in Form von erregten Magneten bestehen, wobei der Erregungsstrom aus einer Zusatzbatterie ensteht, und durch einen Anemometer oder einen Tachymeter oder jede andere Steuerungsvorrichtung bei einer vorbestimmten Windgeschwindigkeit oder Umdrehungszahl bewirkt wird.

6. Turbine nach Anspruch 1, dadurch gekennzeichnet dass die mit der Darrieus-Turbine (1) verbundene Achse (4') vorteilhaft mit einem Stator (11) eines Elektrogenerators ausgerüstet ist und die Achse (4) der Turbine (2), freidrehend auf der Achse (4') montiert, mit dem Rotor (12) desselben Generators ausgerüstet ist, wobei eine Freilaufvorrichtung die Verbindung der zwei Turbinen beim Anlauf herstellen kann, und die unterschiedliche Umdrehungsgeschwindigkeit der Turbinen in ihrer normalen Funktion eine direkt benutzbare elektrische Energie erzeugt.

7. Turbine nach Anspruch 1, dadurch gekennzeichnet dass die mit der Turbine Darrieus (1) verbundene Achse (4') vorteilhaft mit einem Stator (12) eines elektrischen Generators ausgerüstet ist und die Achse (4) der frei auf der Achse (4') rotierende Turbine (2) mit dem Rotor (12) desselben Generators ausgerüstet ist, wobei ein Erregungsstrom, von einer Batterie kommend und gesteuert von einem Anemometer, Tachymeter oder von einer anderen Steuerungsvorrichtung bei einer bestimmten Windgeschwindigkeit oder Umdrehung, die Verbindung beim Anlauf der zwei Turbinen stellt, wobei die unterschiedliche Rotationsgeschwindigkeit der Turbinen, in normaler Funktionsgeschwindigkeit, eine direkt benutzbare elektrische Energie erzeugt, wobei, der von dem Generator, bestehend aus Stator (11) und Rotor (12), erzeugte Strom einen in die Turbinen integrierten oder nicht integrierten Generator (13), mit variabler Erregung erregt, oder auf eine elektrische Verbindungskupplung (14) der Turbine (2) mit der Achse (4') der Turbine (1) und/oder eine elektrische auf die Achse (4') montierte Bremse (15) die Bremsung der Turbine (1) wirkt, wobei die Kupplung (14) durch die Vermittlung eines Auslösers der auf eine gegebene Stromreizschwelle oder Leistung reagiert, bewirkt wird, das heisst auf eine untere Stufe, und wobei die Bremse durch denselben Auslöser oder durch einen zweiten Auslöser sobald die Stromreizschwelle oder vorprogrammierte grössere Leistung erreicht ist, bewirkt wird.

8. Turbine nach Anspruch 1, dadurch gekennzeichnet dass die diskontinuierliche Verbindung zwischen den Turbinen (2) und (1) aus einer zentrifugalen, mit der Achse (1) der Anlaufturbine (2) verbundenen und mit einer Kupplung kombinierten Kontaktvorrichtung (1) besteht, wobei die zentrifugale Vorrichtung (16), bei einer vorbestimmten Umdrehungszahl, die Verbindung zwischen den Turbinen (2 und 1) entkuppelt, und seine Kontakte dann eine Zusatzbatterie (17) in Wirkung setzen, dessen Strom zur Erregung eines Generators (16) dient, dessen Stator mit der festen Achse (4') der Turbine (1) verbunden ist und dessen Rotor mit der genannten Turbine (1) verbunden ist, wobei dieser Generator (18) in Funktion die Zusatzbatterie (17) ladet.

9. Turbine nach irgendeinem der Ansprüche 1 bis 8, dadurch gekennzeichnet dass die Turbinen (2) und (1) mit Lichtelementen in Form von Leuchten oder Signalen versehen sind welche durch elektrischen Strom versorgt werden von einem, in der Turbine integrierten oder durch diese angetriebenen, Generator.

10. Turbine nach irgendeinem der Ansprüche 1 bis 9, dadurch gekennzeichnet dass die Turbine (1) vom Typ Darrieus elastisch verformbar ist und vorzugsweise aus Streifen besteht die symetrisch, jeder an einem Ende auf das obere Teil der gemeinsamen Drehachse (4') und an seinem anderen Ende, in Form eines Flügels (1') beweglich an der gemeinsamen Rotationsachse (4') mittels auf die Anlaufturbine (2) wirkende Hebel (2), sei es durch eine zentrifugale Kupplungsvorrichtung und/oder Bremsvorrichtung sei es direkt, montiert, wobei die Hebel (20) so angeordnet sind, dass sie die Möglichkeit einer Wippung auf die Träger (21) der Achse (4') haben und die beweglichen Elemente einer zentrifugalen Kupplungs- (19) und/oder Bremsvorrichtung bilden.

11. Turbine nach Anspruch 10, dadurch gekennzeichnet dass die zentrifugale Kupplungsvorrichtung (19) aus zwei konzentrischen, mit der Rotationsachse der Turbine (2) verbundenen, Kupplungstrommeln (22, 23) besteht, wobei die äussere Trommel (22) mit, mit den Enden der Hebeln (20), in Position des Anlaufes der Turbine, verbundenen Kupplungsschuhe (24), mitwirkt und wobei die innere Trommel (23) mit den besagten Hebeln (20) in einer erhöhten Rotationsgeschweindigkeits-Position, zur Wiederkopplung der Turbine (2) wirkt, wobei eine Druckfeder (25) die Hebel (20) unter einer vorprogrammierten Spannung belastet.

12. Turbine nach irgendeinem der Ansprüche 10 und 11, dadurch gekennzeichnet dass die Kupplungsschuhe (24) der Hebeln (20) in Ruhestellung oder bei geringer Rotationsgeschwindigkeit mit einer Kupplungstrommel (26) wirken, die mit der Anlaufturbine (2) verbunden ist, wobei die Hebel, in dieser Ruheposition, durch eine Rückhaltefeder (27) mit einer vorbestimmten Spannung festgehalten sind und wobei die andere Endseite (28) der Hebeln (20), in sehr hoher Geschwindigkeits-Position der Turbine (1), mit einer, mit dem Gestell-Mast (30) verbundenen reibehydraulischen oder elektrischen Bremse (29) wirkt.

13. Turbine nach Anspruch 10, dadurch gekennzeichnet dass die mit der Achse (4') verbundenen Hebeln (20) mit, bei einer sehr hohen Rotationsgeschwindigkeit der Turbine (1), einer mit der Mitnehmerachse (32) verbundenen Trommel (31) einer Energieumwandlungsvorrichtung (33) wirken.

14. Turbine nach Anspruch 10, dadurch gekennzeichnet dass die Anlaufturbine (2) aus zwei räumlichen Leitschaufeln (2') besteht, die an ihrem oberen Ende mit einem gemeinsamen Gelenk (34) verbunden sind, das auf der Rotationsachse (4') vorgesehen ist, und die gelenklich an ihrem unteren Teil auf einem Ende der Hebeln (20) montiert sind, welche auf die Halterung (21) montiert sind und dessen anderes Ende mit den Flügeln (1') der Turbine (1) verbunden ist.

EP 0 188 167 B1

Fig.1

Fig. 2

Fig. 3

Fig. 4

EP 0 188 167 B1

Fig. 5

Fig. 6

Fig. 7

Fig. 8

1

2

Fig. 9

4

12

11

4'

13

Fig. 10

1

4'

14

2

4

11

12

15

1

2

4'

16

Fig. 11

18

17

4

3

EP 0 188 167 B1

Fig.12

Fig.13

Fig 14

Fig.15

Fig.16

Fig.17